# EUROPÄISCHE PATENTSCHRIFT

(11) **EP 2 256 453 B1**
(45) Veröffentlichungstag und Bekanntmachung des Hinweises auf die Patenterteilung: **14.05.2014**
(21) Anmeldenummer: 10003507.0
(22) Anmeldetag: 31.03.2010
(51) Int. Cl.: F41H 7/04, B60P 7/08

(54) **Minensichere Komponentenlagerung**
Mine-safe mounting means for components
Dispositif de montage de composants sécurisé contre les mines

(30) Priorität: 29.05.2009 DE 102009023225
(43) Veröffentlichungstag der Anmeldung: 01.12.2010
(73) Patentinhaber: Rheinmetall Landsysteme GmbH, 29345 Unterlüß (DE)
(72) Erfinder: Wintjen, Jan, 24229 Schwedeneck (DE)
(74) Vertreter: Dietrich, Barbara

(56) Entgegenhaltungen:
- EP-A2- 0 057 361
- EP-A2- 0 271 048
- US-A- 4 248 558

## Beschreibung

Die Erfindung beschäftigt sich mit der Erhöhung der Sicherheit insbesondere einer Fahrzeug-Besatzung in Hinsicht des Minenschutzes und einer Minenansprengung des Fahrzeugs.

Bekannte einfache Maßnahmen für den Minenschutz ist das Anbringen_eines von außen unter einem Fahrzeug zu montierenden Schutz, wie beispielsweise aus der DE 31 19 786 A1 bekannt. Diverse weitere Schutzmaßnahmen bzw. Panzerungen kann der Fachmann der DE 199 41 928 C2, DE 10 2007 022 143 A1, DE 10 2006 052 609 A1, DE 10 2005 050 981 A1 sowie der DE 10 2005 013 660 A1 entnehmen. Diese Maßnahmen betreffen insbesondere den Schutz gegen die Wirkung einer Landmine bezogen auf das Fahrzeug selbst.

Insbesondere bei Fahrzeugen mit außen zu befestigenden Komponenten, wie beispielsweise eine Speichertrommel des Hauptwindenseils eines Bergeseils (eines Bergepanzers), wird in derartigen Fällen des Schutzanbaus die Zugängigkeit für die Befestigung der Trommel nur durch eine aufwändige Demontage der Minenschutzplatte möglich.

Die D1 - EP 0 057 361 A - betrifft ein Einschub-Steuerelement für eine Containerbefestigung, das aus einem Fundament und einem Staustück besteht, mit einer Keilverbindung. Um ein ebenes Deck zu erzielen, wird vorgeschlagen, in mindestens einer ersten Keilverbindungsfläche des Fundaments mindestens eine erste Einsetzlücke vorzusehen, wobei das Staustück an entsprechender Stelle in mindestens einer zweiten Keilführungsfläche ebenfalls mindestens eine zweite Einsetzlücke aufweist.

Die Erfindung stellt sich die Aufgabe, eine Befestigung aufzuzeigen, die ein Bauteilversagen zumindest minimiert.

Gelöst wird die Aufgabe durch die Merkmale des Patentanspruchs 1. Vorteilhafte Ausführungen sind den Unteransprüchen entnehmbar.

Der Erfindung liegt die Idee zugrunde, in Reaktion darauf die Befestigung der Seiltrommel oder anderer Komponenten vorzugsweise in das Fahrzeuginnere einzubinden in Fällen, wo das bautechnisch möglich ist. Dazu wird auf bzw. in dem Fahrzeugboden ein Lagerbock befestigt, der wenigstens zwei oder mehrere Nutenführungen besitzt. Die Befestigung des Lagerbocks kann vorzugsweise durch Auf- bzw. Einschweißen erfolgen. Die zu befestigende Komponente, im angeführten Beispiel besagte Seiltrommel, selbst wird auf eine Platte bzw. einem Gegenlager bestehend aus einer Platte befestigt, an der sich entsprechende Nutensteine befinden. Dabei werden wenigstens zwei bevorzugt jedoch vier oder mehrere Nutensteine am Gegenlager vorgesehen. Für die Montage wird das Gegenlager mit den Nutensteinen parallel zum Fahrzeugboden in die Nuten des Lagerbocks geschoben und zum Abschluss die Schrauben oder dergleichen Befestigungsmöglichkeiten fixiert. In Fällen, wo die Befestigung nicht am / im Fahrzeugboden machbar ist, kann selbige Lagerung alternativ auf dem Fahrzeug (-dach) eingebunden werden.

Die Nutverbindung ist so ausgeführt, dass ein mechanischer Endanschlag realisiert und damit eine formschlüssige Verbindung geschaffen wird, sodass bei einer Minendetonation die Hauptkräfte über die Nutverbindung und nicht über die Schraubenverbindung aufgenommen werden.

Durch eine zusätzliche Verjüngung in der Nutenführung kann ein zu weites Einbringen der Nutensteine des Gegenlagers ausgeschlossen werden. Die Einbindung mehrerer Nutensteine hat des weiteren den technischen Vorteil, dass das Einfädeln der Nutensteine in die Nutenführungen vereinfacht werden kann, da die Gegenplatte bzw. das Gegenlager beispielsweise mittig auf den Lagerbock abgelegt wird und das Gegenlager nur noch einen geringen Weg nach dem Einschnäbeln in den Nuten zurücklegen muss (kürzerer Verschiebungsweg).

Vorgeschlagen wird somit eine minensichere Komponentenlagerung für diverse Komponenten eines Fahrzeugs, wie eines Bergepanzers, Pionierpanzers oder Minenräumfahrzeuges etc., bestehend aus einem im / am Fahrzeugboden als auch am Fahrzeugdach befestigbaren Lagerbock mit Nutenführungen und einem Gegenlager mit Nutensteinen. Die Nutführungen sind bevorzugt parallel ausgeführt, sodass ein paralleles Verschieben des Gegenlagers mit der Komponente erfolgt. Bei runden Nutenführungen wird das Gegenlager hingegen verdreht.

Die Vorteile liegen somit darin begründet, dass neben der Erhöhung des Schutzniveaus für die Besatzung die Minimierung der Gefahr des Bauteilversagens geschaffen wird. Das Konstrukt kann größere Kräfte aufnehmen und es ermöglicht eine einfachere sowie bessere Montage.

Anhand eines Ausführungsbeispiels mit Zeichnungen soll die Erfindung näher erläutert werden. Es zeigt:
- Fig. 1-3: einen prinzipiellen Systemaufbau für die Lagerung und Befestigung,
- Fig. 4-7: einen möglichen Montageablauf.

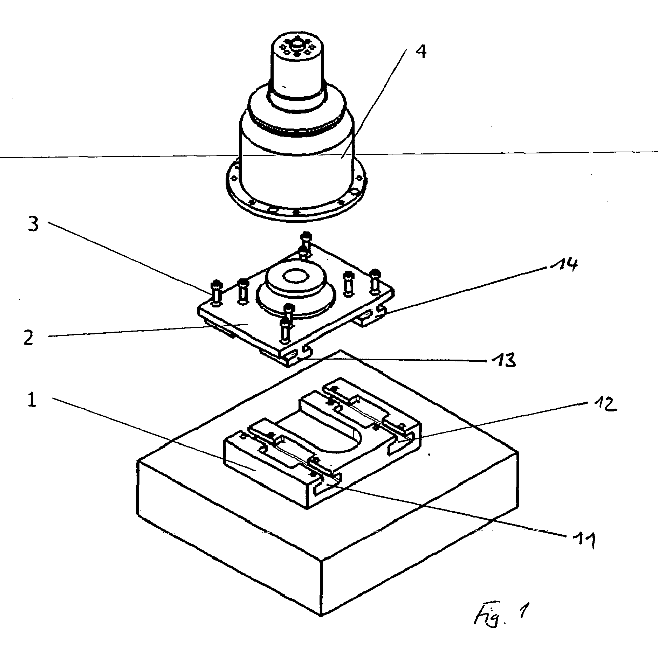

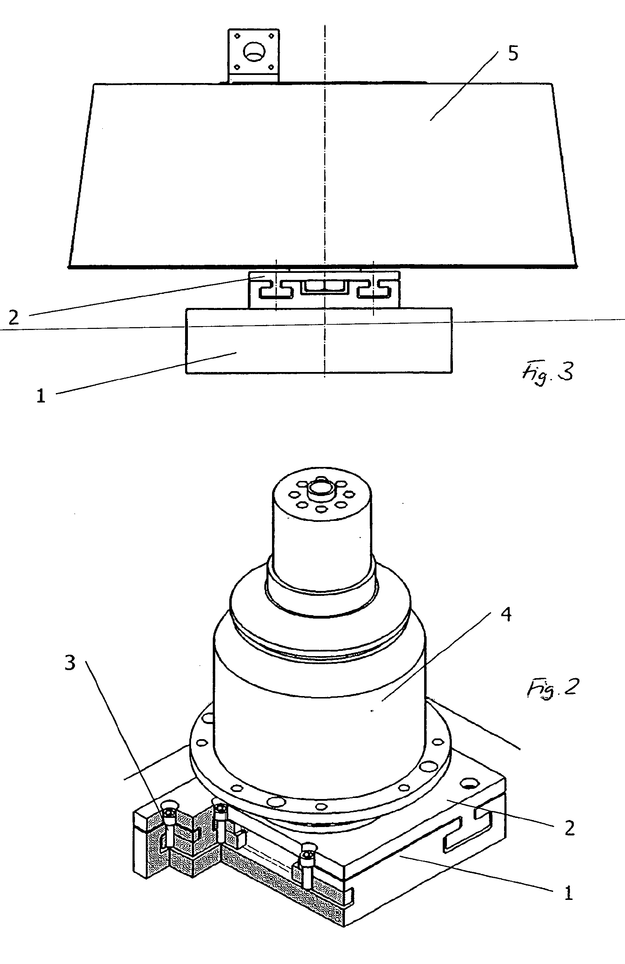

In Fig. 1 ist mit 10 eine minensichere Befestigung bzw. Komponentenlagerung für diverse Komponenten eines Fahrzeugs (nicht näher dargestellt, da dem Fachmann bekannt), wie eines Bergepanzers, Pionierpanzers oder Minenräumfahrzeuges etc., auf selbigem (vorzugsweise, aber Bedingung). Die Befestigung 10 besteht im Wesentlichen aus einem Lagerbock 1 mit Nutenführungen 11, 12. Dieser wird in diesem Ausführungsbeispiel auf / im Fahrzeugboden bevorzugt angeschweißt (nicht näher dargestellt). Ein Teil 4 einer Komponente 5, hier eine Bremse 4, an der hier eine Speichertrommel (Fig. 3) befestigt ist, wird vor der Montage mit einem Gegenlager 2 beispielsweise über Schrauben 3 verschraubt. Mit den Schrauben 3 (oder weiteren, anderen Schrauben oder Befestigungselementen) wird dann das Gegenlager 2 mit dem Lagerbock 1 verbunden (hier verschraubt) - Fig. 2. Das Gegenlager 2 weist seinerseits bevorzugt zwei oder mehrere Nutensteine 13, 14 auf.

Fig. 3 zeigt die am Fußboden befestigte Speichertrommel 5 (in diesem Ausführungsbeispiel als auserwählte Komponente).

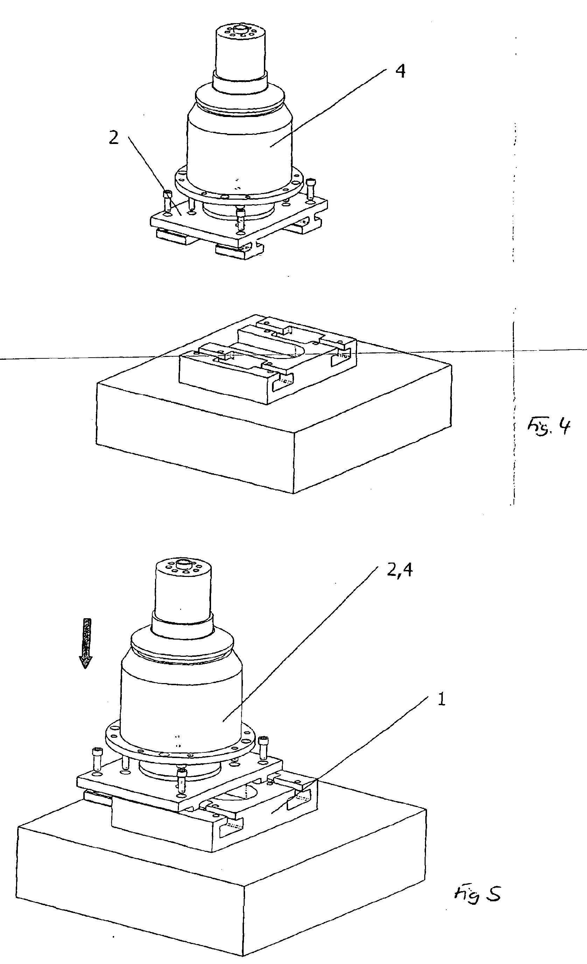

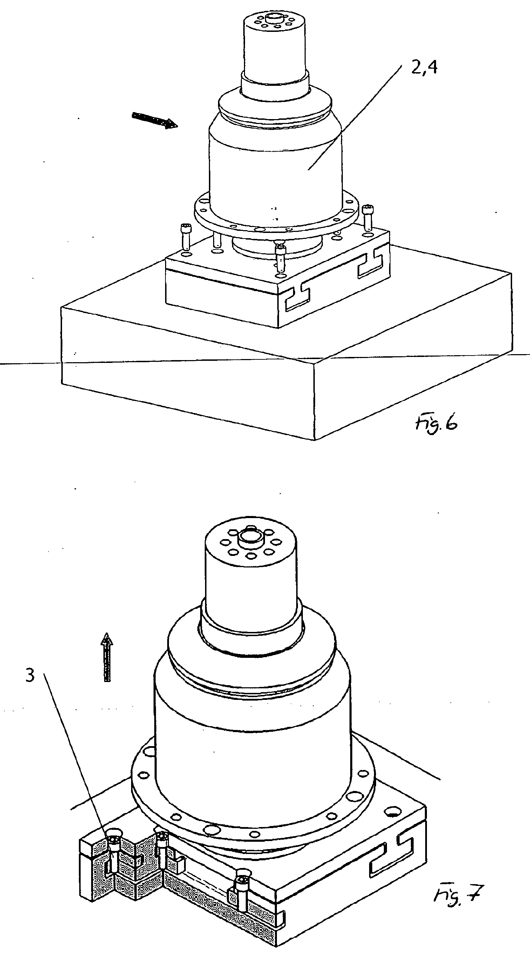

Die Montage wird durch die Fig. 4 bis 7 skizziert.

In einem ersten Schritt werden die Bremse 4 und das Gegenlager 2 miteinander verbunden. Beide Baugruppen 2, 4 werden in den Lagerbock 1 eingeführt / aufgesetzt. Dazu besitzt der Lagerbock 1 in den Nutenführungen 11, 12 beispielsweise mittig Einkerbungen oder Vertiefungen 15, 16 auf, in welche die Nutensteine 13, 14 des Gegenlagers eingesetzt werden und so in die Nutenführungen 11, 12 einschnäbeln können. Das Gegenlager 2 wird dann soweit verschoben, bis die Bohrungen deckungsgleich sind, sodass die Schraubenverbindung angezogen werden kann. Durch das Verschrauben wird das Gegenlager 2 mit dem Lagerbock 1 spielfrei verspannt. Andere Befestigungsmöglichkeiten dieser Art sind denkbar.

Das vorgenannte Ausführungsbeispiel ist nicht auf eine parallele Nutenführung 11, 12 beschränkt. So kann die Nutverbindung rund sein, sodass das Gegenlager 2 nicht parallel geschoben, sondern nur um einen geringen Winkel verdreht werden muss, ähnlich bekannter Schraub- und/ oder Bajonettverbindungen. Zur umfänglichen Kraftaufnahme sollte die runde Nut die ebenfalls runden (halbrund, teilrund) Nutensteine beidseitig umschließen.

## Patentansprüche

1. Minensichere Komponentenlagerung (10) für diverse Komponenten (5) eines Fahrzeugs, wie eines Bergepanzers, Pionierpanzers oder Minenräumfahrzeuges etc., bestehend aus
• einem im / am Fahrzeugboden als auch am Fahrzeugdach befestigbaren Lagerbock (1) mit Nutenführungen (11),
• einem Gegenlager (2) mit Nutensteinen (13, 14), wobei
• das Gegenlager (2) zur Aufnahme der Komponente (5) und deren Teile (4) dient und mit dem Lagerbock (1) spielfrei verspannbar ist, sodass
• die Nutverbindung (11, 12, 13, 14) bei einer Minendetonation die Hauptkräfte aufnehmen kann.

2. Komponentenlagerung nach Anspruch 1, **dadurch gekennzeichnet, dass** der Lagerbock (1) wenigstens zwei Nutenführungen (11, 12) besitzt.

3. Komponentenlagerung nach Anspruch 1 oder 2, **dadurch gekennzeichnet, dass** das Gegenlager (2) aus einer Platte besteht.

4. Komponentenlagerung nach einem der Ansprüche 1 bis 3, **dadurch gekennzeichnet, dass** an der Gegenplatte (2) zwei oder mehrere Nutensteine (13, 14) angebracht sind.

5. Komponentenlagerung nach einem der Ansprüche 1 bis 4, **dadurch gekennzeichnet**, däss Teile (4) der Komponente (5) mit dem Gegenlager (2) vorzugsweise verschraubt sind.

6. Komponentenlagerung nach einem der Ansprüche 1 bis 5, **dadurch gekennzeichnet, dass** der Lagerbock (1) mit der Fahrzeugstruktur vorzugsweise verschweißt ist.

7. Komponentenlagerung nach einem der Ansprüche 1 bis 6, **dadurch gekennzeichnet, dass** die Nutenführungen (11, 12) parallel zueinander ausgerichtet sind.

8. Komponentenlagerung nach Anspruch 7 **dadurch gekennzeichnet, dass** Einkerbungen (15, 16) in den parallelen Nutenführungen (11, 12) eingebunden sind, in welche die Nutensteine (13, 14) des Gegenlagers eingesetzt werden und so in die Nutenführungen (11, 12) einschnäbeln können.

9. Komponentenlagerung nach einem der Ansprüche 1 bis 8, **dadurch gekennzeichnet, dass** die Nutenführungen (11, 12) in Richtung Endschlag Verjüngungen aufweisen.

## Claims

1. Mine-proof component mounting (10) for various components (5) of a vehicle such as an armoured recovery vehicle, armoured engineering vehicle or mine clearing vehicle etc., the component mounting being composed of
• a bearing block (1) which can be fastened in/on the vehicle floor and also on the vehicle roof and which has groove guides (11),
• a counter bearing (2) with slide blocks (13, 14), wherein
• the counter bearing (2) serves for holding the component (5) and the parts (4) thereof and can be clamped to the bearing block (1) without play, such that
• the groove connection (11, 12, 13, 14) can absorb the main forces in the event of a detonation of a mine.

2. Component mounting according to Claim 1, **characterized in that** the bearing block (1) has at least two groove guides (11, 12).

3. Component mounting according to Claim 1 or 2, **characterized in that** the counter bearing (2) is composed of a plate.

4. Component mounting according to one of Claims 1 to 3, **characterized in that** two or more slide blocks (13, 14) are attached to the counter plate (2).

5. Component mounting according to one of Claims 1 to 4, **characterized in that** parts (4) of the component (5) are preferably screwed to the counter bearing (2).

6. Component mounting according to one of Claims 1 to 5, **characterized in that** the bearing block (1) is preferably welded to the vehicle structure.

7. Component mounting according to one of Claims 1 to 6, **characterized in that** the groove guides (11, 12) are oriented parallel to one another.

8. Component mounting according to Claim 7, **characterized in that** indentations (15, 16) are incorporated in the parallel groove guides (11, 12), into which indentations the slide blocks (13, 14) of the counter bearing can be inserted and thus engaged into the groove guides (11, 12).

9. Component mounting according to one of Claims 1 to 8, **characterized in that** the groove guides (11, 12) have taperings in the direction of an end stop.

## Revendications

1. Dispositif de montage de composants (10) sécurisé contre les mines pour divers composants (5) d'un véhicule, tel qu'un véhicule blindé de dépannage, un véhicule blindé du génie ou un véhicule de déminage, etc., constitué des éléments suivants
- un support de palier (1) pouvant être fixé dans le/au plancher du véhicule tout comme au toit du véhicule et pourvu de guides à rainure (11),
- un contre-palier (2) pourvu de coulisseaux (13, 14),
- le contre-palier (2) servant à recevoir le composant (5) et ses parties (4) et pouvant être serré sans jeu avec le support de palier (1) de telle sorte que
- la liaison à rainures (11, 12, 13, 14) puisse recevoir les forces principales lors d'une détonation de mine.

2. Dispositif de montage de composants selon la revendication 1, **caractérisé en ce que** le support de palier (1) possède au moins deux guides à rainure (11, 12).

3. Dispositif de montage de composants selon la revendication 1 ou 2, **caractérisé en ce que** le contre-palier (2) est constitué d'une plaque.

4. Dispositif de montage de composants selon l'une quelconque des revendications 1 à 3, **caractérisé en ce que** deux coulisseaux (13, 14) ou plus sont montés sur la contre-plaque (2).

5. Dispositif de montage de composants selon l'une quelconque des revendications 1 à 4, **caractérisé en ce que** des parties (4) du composant (5) sont de préférence vissées sur le contre-palier (2).

6. Dispositif de montage de composants selon l'une quelconque des revendications 1 à 5, **caractérisé en ce que** le support de palier (1) est de préférence soudé sur la structure du véhicule.

7. Dispositif de montage de composants selon l'une quelconque des revendications 1 à 6, **caractérisé en ce que** les guides à rainure (11, 12) sont orientés parallèlement les uns aux autres.

8. Dispositif de montage de composants selon la revendication 7, **caractérisé en ce que** des encoches (15, 16) sont intégrées dans les guides à rainure parallèles (11, 12), dans lesquelles encoches les coulisseaux (13, 14) du contre-palier sont insérés et peuvent ainsi s'engager dans les guides à rainure (11, 12).

9. Dispositif de montage de composants selon l'une quelconque des revendications 1 à 8, **caractérisé en ce que** les guides à rainure (11, 12) présentent des rétrécissements en direction d'une butée de fin de course.
